# FASCICULE DE BREVET EUROPEEN

(11) **EP 3 661 792 B1**
(45) Date de publication et mention de la délivrance du brevet: **05.05.2021**
(21) Numéro de dépôt: 18746923.4
(22) Date de dépôt: 27.07.2018
(51) Int. Cl.: B60K 15/03, G01S 15/00, G01H 3/00

(54) **SYSTEME DE MESURE D'UN PARAMETRE D'UN FLUIDE DANS UN RESERVOIR**
SYSTEM ZUR MESSUNG EINES PARAMETERS EINES FLUIDS IN EINEM TANK
SYSTEM FOR MEASURING A PARAMETER OF A FLUID IN A TANK

(30) Priorité: 31.07.2017 FR 1757319
(43) Date de publication de la demande: 10.06.2020
(73) Titulaire: Plastic Omnium Advanced Innovation And Research, 1130 Bruxelles (BE)
(72) Inventeur: FERHAN, Mehdi, 75017 Paris (FR); FRANCINI, François, 1130 Bruxelles (BE); SANOGO, Yacouba, Troy, Michigan 48083 (US)
(74) Mandataire: LLR
(86) Numéro de dépôt international: PCT/EP2018/070374
(87) Numéro de publication internationale: WO 2019/025300

(56) Documents cités:
- WO-A1-2013/014200
- DE-A1- 10 354 473
- DE-A1-102012 217 891
- FR-A1- 3 035 965
- JP-A- H0 777 477
- US-A- 5 522 428
- US-A1- 2010 001 851

## Description

### DOMAINE TECHNIQUE DE L'INVENTION

La présente invention se rapporte à un système de mesure d'un paramètre d'un fluide dans un réservoir de véhicule automobile tel que le niveau et/ou la concentration.

### ARRIÈRE-PLAN TECHNIQUE DE L'INVENTION

Les réservoirs de carburant comportent une détection du niveau de carburant afin de déterminer le volume restant dans le réservoir. La détection de niveau peut également être couplée avec une détection de concentration du carburant. Chaque détection peut par exemple être effectuée de manière acoustique. Un émetteur d'ultrasons peut ainsi générer des ondes qui sont réfléchies par la surface supérieure du carburant puis captées par un récepteur d'ultrasons ce qui permet de déterminer, en fonction du temps écoulé entre l'émission et la réception, la hauteur du carburant dans le réservoir (voir par exemple les documents US 5 522 428 et DE 103 54 473). Un principe proche permet également de déterminer les variations de concentration à partir d'un parcours d'ondes constant.

Ces détections sont toutefois gourmandes en énergie électrique et impliquent l'utilisation d'ensemble émetteur/récepteur qui augmente non seulement le poids du réservoir et incidemment, du véhicule automobile mais aussi le prix des composants.

### RÉSUMÉ DE L'INVENTION

L'invention a pour but de remédier à ces inconvénients en proposant un système de mesure garantissant un même niveau de fiabilité tout en diminuant la consommation énergétique et la masse nécessaire.

À cet effet, l'invention se rapporte à un réservoir de fluide pour véhicule automobile comportant un corps agencé pour recevoir le fluide et un système de mesure d'un paramètre du fluide dans le réservoir à partir d'une onde acoustique, le système de mesure comprenant au moins un capteur acoustique destiné à capter une onde acoustique, **caractérisé en ce que** l'onde acoustique, appelée bruit, est générée par un autre système dont la fonction principale n'est pas d'émettre une onde acoustique.

Avantageusement selon l'invention, le système de mesure ne comporte pas d'émetteur de sons mais utilise un autre système déjà présent dans le réservoir ou autour du réservoir pour générer les ondes acoustiques destinées à mesurer le niveau et la concentration du fluide dans le réservoir. On comprend donc que la mesure peut être réalisée quand l'autre système est en fonctionnement ou en contrôlant cet autre système à un moment choisi. Cela permet de ne pas diminuer la qualité des mesures tout en nécessitant moins d'éléments pour les détections afin de consommer moins d'énergie et de peser moins lourd. Alternativement, pour le même poids, il devient possible d'intégrer de nouvelles fonctions. Enfin, cela permet une simplification de montage en ayant un émetteur en moins à monter et à raccorder.

Selon d'autres caractéristiques optionnelles de réalisation de l'invention :
- l'autre système est un système d'extraction du fluide en dehors du réservoir ce qui permet d'utiliser un système déjà présent noyé dans le fluide du réservoir ;
- le système de mesure capte les ondes acoustiques générées par une pompe du système d'extraction et transmises dans le fluide ce qui permet avantageusement d'offrir une onde acoustique suffisante ;
- le système de mesure capte les ondes acoustiques générées par une vanne du système d'extraction et transmises dans le fluide qui permet avantageusement d'offrir une onde acoustique quand il n'y a pas de pompe comme pour les fluides sous pression ;
- le système de mesure comporte un dispositif de détection de la concentration du fluide comportant un élément de réflexion acoustique monté à une distance fixe par rapport l'autre système, au moins un capteur acoustique monté entre l'élément de réflexion et l'autre système afin de capter les ondes acoustiques générées par l'autre système et un module de calcul agencé pour déterminer la concentration du fluide ce qui permet avantageusement de suivre les variations de durée des ondes acoustiques par rapport à une même distance fixe parcourue ;
- l'élément de réflexion acoustique est formé par le corps du réservoir ce qui permet de ne pas à avoir à ajouter de pièce supplémentaire, ou une plaque montée dans le réservoir ;
- le module de calcul comporte des moyens pour déterminer, à partir de la distance fixe, du type de fluide et du temps écoulé entre les détections de chaque onde acoustique générée par l'autre système et de son écho renvoyé par l'élément de réflexion, la concentration du fluide ce qui permet de suivre les variations de nature ou de phase du fluide ;
- le système de mesure comporte un dispositif de détection du niveau du fluide comportant le capteur acoustique monté dans le réservoir afin de capter les ondes acoustiques générées par l'autre système et un module de calcul agencé pour déterminer le niveau du fluide ce qui permet avantageusement de suivre les variations de hauteur du fluide dans le réservoir et donc du volume restant dans le réservoir ;
- le module de calcul comporte des moyens pour déterminer, à partir du type de fluide et du temps écoulé entre les détections de chaque onde acoustique générée par l'autre système et de son écho réfléchi par la surface supérieure du fluide, le niveau du fluide dans le réservoir ce qui permet de suivre les variations de hauteur du fluide sans nécessiter de flotteur réfléchissant ou d'une pluralité de capteurs ;
- le système de mesure comporte un premier capteur acoustique monté sur le fond du réservoir, un deuxième capteur acoustique monté sur le haut du réservoir, le module de calcul comportant des moyens pour déterminer, à partir de la distance entre les premier et deuxième capteurs acoustiques, du type de fluide, du type de gaz de remplissage et du temps écoulé entre la détection du premier capteur acoustique et du deuxième capteur acoustique pour chaque onde acoustique générée par l'autre système, le niveau du fluide dans le réservoir ce qui permet avantageusement de suivre les variations de hauteur du fluide dans le réservoir et donc du volume restant dans le réservoir.
- le système de mesure comporte plusieurs capteurs acoustiques montés dans le réservoir afin de capter à plusieurs endroits les ondes acoustiques générées par l'autre système et un module de calcul agencé pour déterminer le niveau et/ou des concentrations du fluide ce qui permet de suivre les variations de nature ou de phase du fluide à plusieurs endroits du réservoir et/ou de suivre les variations de hauteur du fluide dans le réservoir et donc du volume restant dans le réservoir en prenant en compte les variations de nature ou de phase du fluide à plusieurs endroits du réservoir ;
- les capteurs acoustiques sont montés à une distance et une orientation déterminées entre eux, le module de calcul comportant des moyens pour déterminer, à partir de la distance et l'orientation entre les capteurs acoustiques, du type de fluide et du temps écoulé entre les détections des capteurs acoustiques pour chaque onde acoustique générée par l'autre système, le niveau et/ou les concentrations du fluide dans le réservoir ce qui permet de déterminer une modélisation spatiale du fluide dans le réservoir ;
- les capteurs acoustiques sont alignés à une distance constante entre eux ce qui permet de déterminer une modélisation spatiale selon des plans parallèles prédéterminés.

De plus, l'invention se rapporte à un véhicule automobile caractérisé en ce qu'il comporte un réservoir tel que présenté plus haut. Plus précisément, le réservoir peut être par exemple un réservoir de carburant pour un moteur thermique, un réservoir d'additif pour du carburant d'un moteur thermique, un réservoir de produit pour la dépollution de gaz d'échappement d'un moteur thermique ou un réservoir de combustible pour une pile à combustible.

Enfin, l'invention se rapporte à un procédé de mesure d'un paramètre de fluide contenu dans un réservoir pour véhicule automobile, **caractérisé en ce qu'**il comporte les étapes suivantes :
- capter une onde acoustique, appelée bruit, se propageant dans le fluide et générée par un système dont la fonction principale n'est pas d'émettre une onde acoustique ;
- déterminer le paramètre du fluide à partir d'une valeur mesurée à partir de l'onde acoustique captée.

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- la figure 1 est une vue schématique vue de dessus d'un véhicule automobile comportant un réservoir selon l'invention ;
- la figure 2 est une vue schématique en coupe d'un premier mode de réalisation d'un réservoir selon l'invention ;
- la figure 3 est une vue schématique en coupe d'un deuxième mode de réalisation d'un réservoir selon l'invention ;
- la figure 4 est une vue schématique en coupe d'un troisième mode de réalisation d'un réservoir selon l'invention ;
- la figure 5 est une représentation de signaux obtenus par un système de mesure selon le troisième mode de réalisation de l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Dans tout ce qui suit, les orientations sont les orientations habituelles d'un véhicule automobile. En particulier, les termes « supérieur », « inférieur », « gauche », « droit », « au-dessus », « en-dessous », « vers l'avant » et « vers l'arrière » s'entendent généralement par rapport au sens normal de circulation du véhicule automobile et à la position du conducteur.

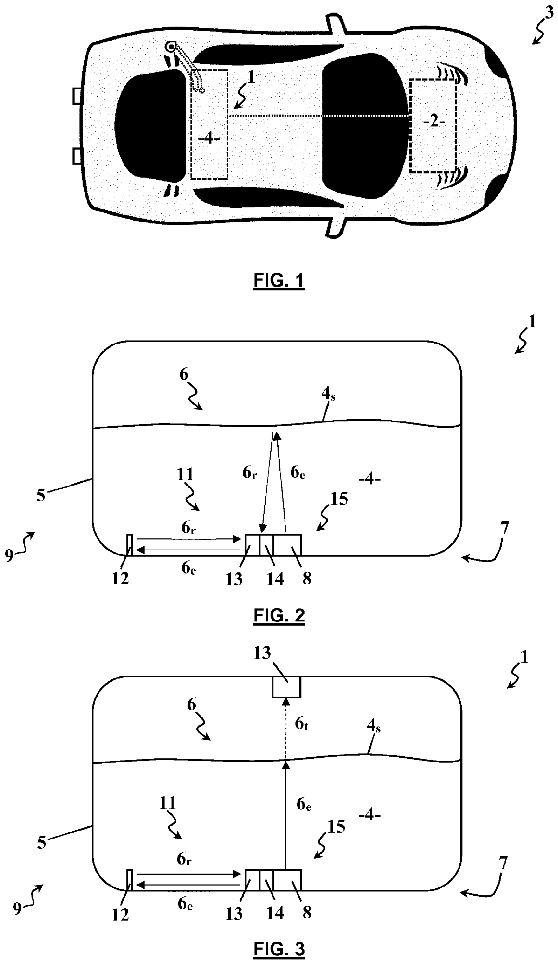

Comme visible à la figure 1, l'invention se rapporte à un réservoir 1 destiné à être monté dans un véhicule automobile 3. À titre nullement limitatif, le réservoir 1 peut ainsi être est un réservoir de carburant pour un moteur thermique 2, un réservoir d'additif pour du carburant d'un moteur thermique 2, un réservoir de produit pour la dépollution de gaz d'échappement d'un moteur thermique 2, un réservoir d'eau pour l'admission (air ou mélange air - carburant) d'un moteur thermique 2 ou un réservoir de combustible pour une pile à combustible. On comprend donc que le fluide 4 peut être du carburant tel que de l'essence ou du gazole, de la cérine, de l'urée, de l'ammoniac, de l'eau déminéralisée ou du dihydrogène.

Dans un premier mode de réalisation visible à la figure 2, le réservoir 1 de fluide 4 comporte un corps 5 agencé pour recevoir le fluide 4. Le réservoir 1 comporte un système 7 d'extraction du fluide 4 en dehors du réservoir 1 pour son utilisation dans le véhicule automobile 3. Le système 7 d'extraction peut notamment comporter un dispositif de pompage muni d'une pompe 8 actionnée par un moteur et d'une vanne de contrôle.

De plus, le réservoir 1 comporte en outre un système 9 de mesure d'un paramètre du fluide 4 dans le réservoir 1 afin de gérer l'utilisation du fluide 4 dans le véhicule automobile 3. Avantageusement selon l'invention, le système 9 de mesure est agencé pour capter des ondes acoustiques 6 générées par un autre système dont la fonction principale n'est pas d'émettre une onde 6 acoustique afin de déterminer, par exemple, le niveau et/ou la concentration et/ou la densité et/ou la pollution (degré de pureté) et/ou la conductivité du fluide 4 dans le réservoir 1. À titre nullement limitatif, dans l'explication ci-dessous, l'autre système utilisé sera le système 7 d'extraction dans le fluide 4.

Plus précisément, le système 9 de mesure permet de capter les déplacements de molécules dans le fluide 4, les variations de vitesses de molécules dans le fluide 4, les variations de densité dans le fluide 4 ou les variations de pression dans le fluide 4 induits par les ondes acoustiques 6 générées par le système 7 d'extraction.

À titre nullement limitatif, les ondes acoustiques 6 pourraient ainsi être générés par le fonctionnement de la pompe 8, de son moteur, de la vanne ou tout autre élément du système 7 d'extraction. On comprend donc que le système 9 de mesure peut être utilisé quand le système 7 d'extraction est en fonctionnement ou en contrôlant le fonctionnement du système 7 d'extraction à un moment choisi.

Dans l'exemple visible à la figure 2, le premier mode de réalisation utilise la pompe 8 comme générateur d'ondes acoustiques 6. Le système 9 de mesure comporte un dispositif 11 de détection de la concentration du fluide 4. Le dispositif 11 comprend préférentiellement un élément 12 de réflexion monté à une distance fixe par rapport au système 7 d'extraction afin de connaître à l'avance la distance qui sera parcourue par les ondes acoustiques 6 générées par le système d'extraction 7 dans le fluide 4. L'élément 12 peut ainsi être formé une plaque montée en saillie à l'intérieur du réservoir 1. Toutefois, suivant la géométrie du réservoir 1, l'élément 12 de réflexion peut alternativement être formé par une partie du corps 5 du réservoir 1.

De plus, le dispositif 11 comporte au moins un capteur 13 acoustique monté entre l'élément 12 de réflexion et le système 7 d'extraction afin de capter les ondes acoustiques 6ₑ émises par le système 7 d'extraction ainsi que leur écho, c'est-à-dire les ondes acoustiques 6ᵣ réfléchies par l'élément 12 de réflexion. Lorsque les ondes 6 acoustiques générées par la pompe 8 du système 7 d'extraction, les capteurs 13 acoustiques sont, de manière préférée, des récepteurs ultrasoniques à bande fréquentielle large ou étroite.

Enfin, le dispositif 11 comprend un module 14 de calcul agencé pour déterminer la concentration du fluide 4. Plus précisément, le module 14 de calcul détermine, à partir de la distance fixe, le type de fluide et du temps écoulé entre les détections de chaque onde acoustique 6ₑ émises par le système 7 d'extraction et de son écho 6ᵣ renvoyé par l'élément 12 de réflexion, la concentration du fluide 4. En effet, la variation de temps pour effectuer la distance fixe permet de surveiller les variations de concentration du fluide 4. Bien entendu, un étalonnage préalable en fonction de l'agencement du réservoir 1, de la distance fixe et du type de fluide 4 permet au module 14 de calcul de précisément mesurer la concentration effective et de s'adapter à d'éventuelles variations de fabrication pour un même type de réservoir 1.

À titre nullement limitatif, un tableau de correspondance pourrait, par exemple, être préalablement stocké dans la mémoire du capteur 13 qui détermine la valeur de la concentration du fluide 4 par interpolation ou comparaison. Ainsi, la concentration est proportionnelle à la durée entre l'émission et la réception de l'onde 6 acoustique, sur une distance fixe, propagée dans le milieu

Dans l'exemple visible à la figure 2, le système 9 de mesure comporte également, selon le premier mode de réalisation, un dispositif 15 de détection du niveau du fluide 4 comportant au moins un capteur 13 acoustique monté dans le réservoir 1 afin de capter les ondes acoustiques 6ₑ émises par le système 7 d'extraction ainsi que leur écho, c'est-à-dire les ondes acoustiques 6ᵣ réfléchies par la surface supérieure 4ₛ du fluide 4. En effet, la partie supérieure du réservoir 1 comportant principalement un gaz de remplissage tel que de l'air ou un mélange entre un gaz de remplissage et une autre phase du fluide 4, l'onde acoustique 6ₑ émise va être principalement réfléchie 6ᵣ et ainsi revenir vers le capteur 13.

De plus, le dispositif 15 comprend un module 14 de calcul agencé pour déterminer le niveau du fluide 4, c'est-à-dire la hauteur de la surface supérieure 4ₛ du fluide 4 dans le réservoir 1. Plus précisément, le module 14 de calcul détermine, à partir du type de fluide et du temps écoulé entre les détections de chaque onde acoustique 6ₑ générée par le système 7 d'extraction et de son écho 6ᵣ renvoyé par la surface supérieure 4ₛ du fluide 4, la distance parcourue et donc le niveau du fluide 4 dans le réservoir 1. En effet, la variation de temps pour effectuer l'aller et le retour permet de surveiller les variations de niveau du fluide 4. Bien entendu, un étalonnage préalable en fonction de l'agencement du réservoir 1, de la concentration du fluide 4 et du type de fluide 4 permet au module 14 de calcul de précisément mesurer le niveau effectif et de s'adapter à d'éventuelles variations de fabrication pour un même type de réservoir 1.

À titre nullement limitatif et de manière analogue à la détermination de la concentration du fluide 4, le niveau du fluide 4 est égal au produit de la vitesse du son dans le milieu et la durée entre l'émission et la réception de l'onde 6 acoustique. La vitesse du son dans un milieu étant sensible à la densité du milieu et donc à la concentration, une compensation en concentration s'avère utile pour garantir les performances de détection.

On comprend donc que les dispositifs 11, 15 de détection de la concentration et du niveau du fluide 4 du système 9 peuvent être liés dans leur fonctionnement, voire partager un seul et même capteur 13. On réalise alors immédiatement que l'invention permet, sans diminuer la qualité des mesures, d'utiliser moins d'éléments pour effectuer les détections afin de consommer moins d'énergie et de peser moins lourd.

Dans un deuxième mode de réalisation visible à la figure 3, le réservoir 1 de fluide 4 comporte un corps 5 agencé pour recevoir le fluide 4. Le réservoir 1 comporte en outre un système 7 d'extraction du fluide 4 en dehors du réservoir 1 pour son utilisation dans le véhicule automobile 3 identique à celui du premier mode de réalisation. De plus, le réservoir 1 comporte en outre un système 9 de mesure d'un paramètre du fluide 4 dans le réservoir 1 afin de gérer l'utilisation du fluide 4 dans le véhicule automobile 3. Avantageusement selon l'invention, le système 9 de mesure est agencé pour capter des ondes acoustiques 6 générées par un autre système dont la fonction principale n'est pas d'émettre une onde 6 acoustique afin de déterminer, par exemple, le niveau et/ou la concentration du fluide 4 dans le réservoir 1. À titre nullement limitatif, dans l'explication ci-dessous, l'autre système utilisé sera le système 7 d'extraction dans le fluide 4.

Plus précisément, le système 9 de mesure permet de capter les déplacements de molécules dans le fluide 4, les variations de vitesses de molécules dans le fluide 4, les variations de densité dans le fluide 4 ou les variations de pression dans le fluide 4 induits par les ondes acoustiques 6 générées par le système 7 d'extraction.

À titre nullement limitatif, les ondes acoustiques 6 pourraient ainsi être générés par le fonctionnement de la pompe 8, de son moteur, de la vanne ou tout autre élément du système 7 d'extraction. On comprend donc que le système 9 de mesure peut être utilisé quand le système 7 d'extraction est en fonctionnement ou en contrôlant le fonctionnement du système 7 d'extraction à un moment choisi.

Dans l'exemple visible à la figure 3, le deuxième mode de réalisation utilise la pompe 8 comme générateur d'ondes acoustiques 6. Le système 9 de mesure comporte un dispositif 11 de détection de la concentration du fluide 4 identique à celui du premier mode de réalisation avec les mêmes effets et avantages afin de précisément mesurer la concentration effective du fluide 4 dans le réservoir 1.

Dans l'exemple visible à la figure 3, le système 9 de mesure comporte également, selon le deuxième mode de réalisation, un dispositif 15 de détection du niveau du fluide 4 comportant au moins deux capteurs 13 acoustiques montés dans le réservoir 1 afin de capter les ondes acoustiques 6ₑ émises par le système 7 d'extraction ainsi que les ondes acoustiques 6ₜ transmises au travers de la surface supérieure 4ₛ du fluide 4. En effet, la partie supérieure du réservoir 1 comportant principalement un gaz de remplissage tel que de l'air ou un mélange entre un gaz de remplissage et une autre phase du fluide 4, l'onde acoustique 6ₑ émise va être partiellement transmise 6ₜ et ainsi arriver vers le deuxième capteur 13.

De plus, le dispositif 15 comprend un module 14 de calcul agencé pour déterminer le niveau du fluide 4, c'est-à-dire la hauteur de la surface supérieure 4ₛ du fluide 4 dans le réservoir 1. Plus précisément, le module 14 de calcul détermine, à partir de la distance entre les premier et deuxième capteurs 13 acoustiques, du type de fluide, du type de gaz de remplissage et du temps écoulé entre la détection du premier capteur 13 acoustique et du deuxième capteur 13 acoustique pour chaque onde acoustique générée par le système 7 d'extraction, le niveau du fluide 4 dans le réservoir et donc le niveau du fluide 4 dans le réservoir 1. En effet, la variation de durée entre les détections des premier et deuxième capteurs 13 acoustiques permet de surveiller les variations de niveau du fluide 4. Bien entendu, un étalonnage préalable en fonction de l'agencement du réservoir 1, de la concentration du fluide 4, du type de gaz de remplissage et du type de fluide 4 permet au module 14 de calcul de précisément mesurer le niveau effectif et de s'adapter à d'éventuelles variations de fabrication pour un même type de réservoir 1.

On comprend donc que les dispositifs 11, 15 de détection de la concentration et du niveau du fluide 4 du système 9 peuvent être liés dans leur fonctionnement, voire partager un des capteurs 13. On réalise alors immédiatement que l'invention permet, sans diminuer la qualité des mesures, d'utiliser moins d'éléments pour effectuer les détections afin de consommer moins d'énergie et de peser moins lourd.

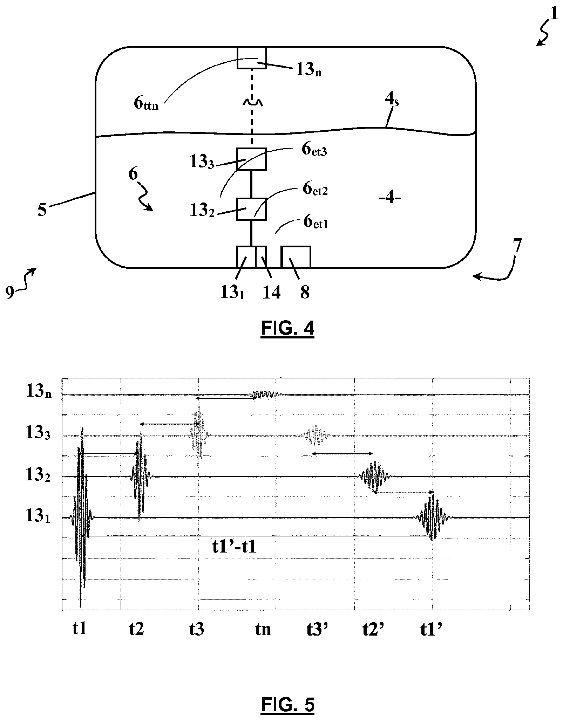

Dans un troisième mode de réalisation visible à la figure 4, le réservoir 1 de fluide 4 comporte un corps 5 agencé pour recevoir le fluide 4. Le réservoir 1 comporte un système 7 d'extraction du fluide 4 en dehors du réservoir 1 pour son utilisation dans le véhicule automobile 3 identique à celui aux premier et deuxième modes de réalisation.

De plus, le réservoir 1 comporte un système 9 de mesure de plusieurs paramètres du fluide 4 dans le réservoir 1 afin de gérer l'utilisation du fluide 4 dans le véhicule automobile 3. Avantageusement selon l'invention, le système 9 de mesure est agencé pour capter des ondes acoustiques 6 générées par un autre système dont la fonction principale n'est pas d'émettre une onde 6 acoustique afin de déterminer, par exemple, le niveau et/ou des concentration du fluide 4 dans le réservoir 1. À titre nullement limitatif, dans l'explication ci-dessous, l'autre système utilisé sera le système 7 d'extraction dans le fluide 4.

Plus précisément, le système 9 de mesure permet de capter les déplacements de molécules dans le fluide 4, les variations de vitesses de molécules dans le fluide 4, les variations de densité dans le fluide 4 ou les variations de pression dans le fluide 4 induits par les ondes acoustiques 6 générées par le système 7 d'extraction.

À titre nullement limitatif, les ondes acoustiques 6 pourraient ainsi être générés par le fonctionnement de la pompe 8, de son moteur, de la vanne ou tout autre élément du système 7 d'extraction. On comprend donc que le système 9 de mesure peut être utilisé quand le système 7 d'extraction est en fonctionnement ou en contrôlant le fonctionnement du système 7 d'extraction à un moment choisi.

Dans l'exemple visible à la figure 4, le troisième mode de réalisation utilise la pompe 8 comme générateur d'ondes 6 acoustiques. Le système 9 de mesure comporte plusieurs capteurs 13₁, 13₂, 13₃, 13ₙ acoustiques montés dans le réservoir 1 afin de capter à plusieurs endroits les ondes acoustiques émises 6ₑ par le système 7 d'extraction mais également réfléchies 6ᵣ par la surface supérieure 4ₛ du fluide 4 ou transmise 6ₜ au travers de la surface supérieure 4ₛ du fluide 4.

Les capteurs 13₁, 13₂, 13₃, 13ₙ acoustiques sont préférentiellement montés à une distance et une orientation déterminées entre eux afin de permettre la détermination du niveau du fluide 4 dans le réservoir 1 mais également la détermination de la concentration du fluide 4 à plusieurs endroits différents. En effet, les réservoirs 1 de véhicule automobile 3 sont soumis aux aléas climatiques des milieux traversés. Ainsi, suivant la nature du fluide 4, des phases de gel et de dégel peuvent intervenir. On comprend alors que la phase du fluide 4 et, incidemment, la propagation des ondes 6 acoustiques peuvent être modifiées.

Avantageusement selon l'invention, les capteurs 13₁, 13₂, 13₃, 13ₙ acoustiques sont donc préférentiellement montés à une distance et une orientation déterminées entre eux. À titre nullement limitatif, la répartition des capteurs 13₁, 13₂, 13₃, 13ₙ acoustiques pourrait être réalisée de manière circulaire, sphérique, polygonal, prismatique ou rectiligne. Dans l'exemple de la figure 4, les capteurs 13₁, 13₂, 13₃, 13ₙ acoustiques sont alignés à une distance constante entre eux entre le fond du réservoir 1 et la partie supérieure du réservoir 1. Chaque capteur 13₁, 13₂, 13₃, 13ₙ acoustique détecte donc les ondes acoustiques 6 générées par le système 7 d'extraction.

Le système 9 de mesure comporte également un module 14 de calcul agencé pour déterminer le niveau et/ou des concentrations du fluide 4. Plus précisément, le module 14 de calcul détermine, à partir de la distance et l'orientation entre les capteurs 13₁, 13₂, 13₃, 13ₙ acoustiques, du type de fluide 4 et du temps écoulé entre les détections des capteurs 13₁, 13₂, 13₃, 13ₙ acoustiques pour chaque onde acoustique générée par le système 7 d'extraction, le niveau et les concentrations du fluide 4 dans le réservoir 1.

La figure 5 montre un exemple de signaux obtenus avantageusement par le système 9 de mesure selon l'invention. L'abscisse désigne le temps écoulé et l'ordonnée montrent les signaux de chaque capteur 13₁, 13₂, 13₃, 13ₙ. Ainsi, à l'instant t1, le capteur 13₁ détecte une onde 6ₑₜ₁ émise par le système 7 d'extraction avec une très grande intensité. À l'instant t2, le capteur 13₂ détecte la même onde 6ₑₜ₂ émise par le système 7 d'extraction avec une grande intensité. À l'instant t3, le capteur 13₃ détecte la même onde 6ₑₜ₃ émise par le système 7 d'extraction avec une intensité moyenne. Enfin, à l'instant tn, le capteur 13ₙ détecte la même onde 6ₜₜₙ transmise au travers de la surface supérieure 4ₛ du fluide 4 avec une plus faible intensité.

Ensuite, à l'instant t3', le capteur 13₃ détecte la même onde réfléchie par la surface supérieure 4ₛ du fluide 4. À l'instant t2', le capteur 13₂ détecte la même onde réfléchie par la surface supérieure 4ₛ du fluide 4. Enfin, à l'instant t1', le capteur 13₁ détecte la même onde réfléchie par la surface supérieure 4ₛ du fluide 4.

On comprend donc qu'une valeur moyenne de niveau du fluide 4 dans le réservoir 1 peut être obtenue par le module 14 de calcul par la durée t1'-t1 et la position du capteur 13₁ dans le réservoir 1. En effet, la variation de la durée t1'-t1 pour effectuer l'aller et le retour permet de surveiller les variations de niveau du fluide 4.

De plus, il est possible de modéliser les concentrations du fluide 4 entre chaque capteur 13₁, 13₂, 13₃, 13ₙ en fonction de leur répartition spatiale. En effet, la variation de temps pour effectuer la distance fixe entre chaque capteur 13₁, 13₂, 13₃, 13ₙ permet de surveiller les variations de concentration du fluide 4 entre chaque capteur 13₁, 13₂, 13₃, 13ₙ.

Enfin, une valeur plus précise de niveau du fluide 4 peut être obtenue utilisant de manière séquentielle la concentration du fluide 4 et le temps entre chaque capteur 13₁, 13₂, 13₃, 13ₙ par le module 14 de calcul. Bien entendu, un étalonnage préalable en fonction de l'agencement du réservoir 1, de la répartition des capteurs 13₁, 13₂, 13₃, 13ₙ acoustiques, de la concentration du fluide 4 et du type de fluide 4 permet au module 14 de calcul de précisément mesurer le niveau effectif et/ou les concentrations effectives et de s'adapter à d'éventuelles variations de fabrication pour un même type de réservoir 1

L'invention n'est pas limitée aux modes de réalisation et variantes présentés et d'autres modes de réalisation et variantes apparaîtront clairement à l'homme du métier. Il est notamment possible que les ondes acoustiques soient générées par un autre système que le système 7 d'extraction. Cet autre système pourrait ainsi être présent ou non dans le réservoir 1 comme, par exemple, le moteur 2 du véhicule automobile 3 ou le bruit ambiant autour du réservoir 1.

De plus, dans le cas du troisième mode de réalisation, il est immédiat que le dispositif 9 de mesure pourrait s'appliquer à des ondes 6 acoustiques émises non par un autre système dont la fonction principale n'est pas d'émettre une onde 6 acoustique mais par le dispositif 9 de mesure lui-même, c'est-à-dire un émetteur de sons dédié appartenant au dispositif 9 de mesure.

Avantageusement selon l'invention, le système 9 de mesure ne saurait se limiter à la détection de niveau et/ou la détection de concentration du fluide 4 comme expliqué ci-dessus. Ainsi, comme par exemple dans le cas d'un réservoir 1 de fluide 4 caloporteur tel de l'eau, le système 9 de mesure peut être agencé pour capter des ondes acoustiques 6 générées par un autre système dont la fonction principale n'est pas d'émettre une onde 6 acoustique afin de déterminer, par exemple, la densité et/ou la pollution (degré de pureté) et/ou la conductivité du fluide 4 caloporteur dans le réservoir 1. Ces informations sont en effet utiles pour contrôler la diminution de la température d'admission de l'air ou du mélange air - carburant de moteurs thermiques par exemple.

## Revendications

1. Réservoir (1) de fluide (4) pour véhicule automobile (3) comportant un corps (5) agencé pour recevoir le fluide (4) et un système (9) de mesure d'un paramètre du fluide (4) dans le réservoir (1) à partir d'une onde acoustique, le système (9) de mesure comprenant au moins un capteur (13) acoustique destiné à capter une onde (6) acoustique, **caractérisé en ce que** l'onde (6) acoustique, appelée bruit, est générée par un autre système (7) dont la fonction principale n'est pas d'émettre une onde acoustique.

2. Réservoir (1) selon la revendication précédente, dans lequel l'autre système est un système (7) d'extraction du fluide (4) en dehors du réservoir (1).

3. Réservoir (1) selon la revendication 1 ou 2, dans lequel le système (9) de mesure comporte un dispositif (11) de détection de la concentration du fluide (4) comportant un élément de réflexion acoustique monté à une distance fixe par rapport l'autre système, le capteur (13) acoustique monté entre l'élément de réflexion et l'autre système (7) afin de capter les ondes acoustiques (6) générées par l'autre système (7) et un module (14) de calcul agencé pour déterminer la concentration du fluide (4).

4. Réservoir (1) selon la revendication précédente, dans lequel l'élément de réflexion acoustique est formé par le corps (5) du réservoir (1) ou une plaque (12) montée dans le réservoir (1).

5. Réservoir (1) selon la revendication 3 ou 4, dans lequel le module (14) de calcul comporte des moyens pour déterminer, à partir de la distance fixe, du type de fluide (4) et du temps écoulé entre les détections de chaque onde (6) acoustique générée par le l'autre système (7) et de son écho renvoyé par l'élément de réflexion, la concentration du fluide (4).

6. Réservoir (1) selon l'une quelconque des revendications précédentes, dans lequel le système (9) de mesure comporte un dispositif (11) de détection du niveau du fluide (4) comportant le capteur (13) acoustique monté dans le réservoir (1) afin de capter les ondes (6) acoustiques générées par l'autre système et un module (14) de calcul agencé pour déterminer le niveau du fluide (4).

7. Réservoir (1) selon la revendication précédente, dans lequel le module (14) de calcul comporte des moyens pour déterminer, à partir du type de fluide et du temps écoulé entre les détections de chaque onde (6) acoustique générée par l'autre système et de son écho réfléchi par la surface supérieure (4ₛ) du fluide (4), le niveau du fluide (4) dans le réservoir (1).

8. Réservoir (1) selon la revendication 6, dans lequel le système (9) de mesure comporte un premier capteur (13) acoustique monté sur le fond du réservoir (1), un deuxième capteur (13) acoustique monté sur le haut du réservoir (1), le module (14) de calcul comportant des moyens pour déterminer, à partir de la distance entre les premier et deuxième capteurs (13) acoustiques, du type de fluide (4), du type de gaz de remplissage et du temps écoulé entre la détection du premier capteur (13) acoustique et du deuxième capteur (13) acoustique pour chaque onde (6) acoustique générée par l'autre système (7), le niveau du fluide (4) dans le réservoir (1).

9. Réservoir (1) selon l'une quelconque des revendications 1 ou 2, dans lequel le système (9) de mesure comporte plusieurs capteurs (13) acoustiques montés dans le réservoir (1) afin de capter à plusieurs endroits les ondes (6) acoustiques générées par l'autre système (7) et un module (14) de calcul agencé pour déterminer le niveau et/ou des concentrations du fluide (4).

10. Réservoir (1) selon la revendication précédente, dans lequel les capteurs (13) acoustiques sont montés à une distance et une orientation déterminées entre eux, le module (14) de calcul comportant des moyens pour déterminer, à partir de la distance et l'orientation entre les capteurs (13) acoustiques, du type de fluide (4) et du temps écoulé entre les détections des capteurs (13) acoustiques pour chaque onde (6) acoustique générée par l'autre système (7), le niveau et/ou les concentrations du fluide (4) dans le réservoir (1).

11. Réservoir (1) selon la revendication précédente, dans lequel les capteurs (13) acoustiques sont alignés à une distance constante entre eux.

12. Véhicule automobile (3) **caractérisé en ce qu'**il comporte un réservoir (1) selon l'une quelconque des revendications précédentes.

13. Véhicule automobile (3) selon la revendication précédente, dans lequel le réservoir (1) est un réservoir de carburant pour un moteur thermique (2), un réservoir d'additif pour du carburant d'un moteur thermique (2), un réservoir de produit pour la dépollution de gaz d'échappement d'un moteur thermique (2) ou un réservoir de combustible pour une pile à combustible.

14. Procédé de mesure d'un paramètre de fluide (4) contenu dans un réservoir (1) pour véhicule automobile (3), **caractérisé en ce qu'**il comporte les étapes suivantes :
- capter une onde (6) acoustique, appelée bruit, se propageant dans le fluide (4) générée par un système (7) dont la fonction principale n'est pas d'émettre une onde acoustique ;
- déterminer le paramètre du fluide (4) à partir d'une valeur mesurée à partir de l'onde captée.

## Patentansprüche

1. Tank (1) für Fluid (4) für Kraftfahrzeug (3), aufweisend einen Körper (5), der zum Aufnehmen des Fluids (4) eingerichtet ist, und ein System (9) zum Messen eines Parameters des Fluids (4) in dem Tank (1) ausgehend von einer akustischen Welle, wobei das Messsystem (9) wenigstens einen akustischen Sensor (13) aufweist, der dazu bestimmt ist, eine akustische Welle (6) zu empfangen, **dadurch gekennzeichnet, dass** die akustische Welle (6), Schall genannt, von einem anderen System (7) erzeugt wird, dessen Hauptfunktion nicht das Aussenden einer akustischen Welle ist.

2. Tank (1) nach dem vorhergehenden Anspruch, wobei das andere System ein System (7) zum Abziehen des Fluids (4) aus dem Tank (1) ist.

3. Tank (1) nach Anspruch 1 oder 2, wobei das Messsystem (9) eine Vorrichtung (11) für die Detektion der Konzentration des Fluids (4) aufweist, die ein akustisches Reflexionselement, das in einem festen Abstand zu dem anderen System montiert ist, den akustischen Sensor (13), der zwischen dem Reflexionselement und dem anderen System (7) montiert ist, um die akustischen Wellen (6), die von dem anderen System (7) erzeugt werden, zu empfangen, und ein Rechenmodul (14), das eingerichtet ist, um die Konzentration des Fluids (4) zu bestimmen, aufweist.

4. Tank (1) nach dem vorhergehenden Anspruch, wobei das akustische Reflexionselement von dem Körper (5) des Tanks (1) oder einer Platte (12), die in dem Tank (1) montiert ist, gebildet ist.

5. Tank (1) nach Anspruch 3 oder 4, wobei das Rechenmodul (14) Mittel aufweist, um, ausgehend von dem festen Abstand, vom Typ des Fluids (4) und von der Zeit, die zwischen den Detektionen jeder akustischen Welle (6), die von dem anderen System (7) erzeugt wird, und ihres von dem Reflexionselement zurückgegebenen Echos vergangen ist, die Konzentration des Fluids (4) zu bestimmen.

6. Tank (1) nach einem der vorhergehenden Ansprüche, wobei das Messsystem (9) eine Vorrichtung (11) für die Detektion des Pegels des Fluids (4) aufweist, die den akustischen Sensor (13), der in dem Tank (1) montiert ist, um die akustischen Wellen (6), die von dem anderen System erzeugt werden, zu empfangen, und ein Rechenmodul (14), das eingerichtet ist, um die Konzentration des Fluids (4) zu bestimmen, aufweist.

7. Tank (1) nach dem vorhergehenden Anspruch, wobei das Rechenmodul (14) Mittel aufweist, um, ausgehend vom Typ des Fluids und von der Zeit, die zwischen den Detektionen jeder akustischen Welle (6), die von dem anderen System (7) erzeugt wird, und ihres von der Oberfläche (4ₛ) des Fluids (4) reflektierten Echos vergangen ist, den Pegel des Fluids (4) in dem Tank (1) zu bestimmen.

8. Tank (1) nach Anspruch 6, wobei das Messsystem (9) einen ersten akustischen Sensor (13) aufweist, der auf dem Boden des Tanks (1) montiert ist, einen zweiten akustischen Sensor (13) aufweist, der auf der Oberseite des Tanks (1) montiert ist, wobei das Rechenmodul (14) Mittel aufweist, um, ausgehend von dem Abstand zwischen dem ersten und zweiten akustischen Sensor (13), vom Typ des Fluids (4), vom Typ des Füllgases und von der Zeit, die zwischen der Detektion des ersten akustischen Sensors (13) und des zweiten akustischen Sensors (13) für jede akustische Welle (6), die von dem anderen System (7) erzeugt wird, vergangen ist, den Pegel des Fluids (4) in dem Tank (1) zu bestimmen.

9. Tank (1) nach einem der Ansprüche 1 oder 2, wobei das Messsystem (9) mehrere akustische Sensoren (13), die in dem Tank (1) montiert sind, um an mehreren Stellen die akustischen Wellen (6) zu empfangen, die von dem anderen System (7) erzeugt werden, und ein Rechenmodul (14), das eingerichtet ist, um den Pegel und/oder Konzentrationen des Fluids (4) zu bestimmen, aufweist.

10. Tank (1) nach dem vorhergehenden Anspruch, wobei die akustischen Sensoren (13) in einem bestimmten Abstand und einer bestimmten Ausrichtung zueinander montiert sind, wobei das Rechenmodul (14) Mittel aufweist, um, ausgehend von dem Abstand und von der Ausrichtung zwischen den akustischen Sensoren (13), vom Typ des Fluids (4) und von der Zeit, die zwischen den Detektionen der akustischen Sensoren (13) für jede akustische Welle (6), die von dem anderen System (7) erzeugt wird, vergangen ist, den Pegel und/oder die Konzentrationen des Fluids (4) in dem Tank (1) zu bestimmen.

11. Tank (1) nach dem vorhergehenden Anspruch, wobei die akustischen Sensoren (13) in einem konstanten Abstand zueinander in Flucht sind.

12. Kraftfahrzeug (3), **dadurch gekennzeichnet, dass** es einen Tank (1) nach einem der vorhergehenden Ansprüche aufweist.

13. Kraftfahrzeug (3), nach dem vorhergehenden Anspruch, wobei der Tank (1) ein Tank für Kraftstoff für einen Verbrennungsmotor (2), ein Tank für Additiv für den Kraftstoff eines Verbrennungsmotors (2), ein Tank für ein Produkt für die Abgasreinigung eines Verbrennungsmotors (2) oder ein Tank für Brennstoff für eine Brennstoffzelle ist.

14. Verfahren zum Messen eines Parameters eines Fluids (4), das in einem Tank (1) für Kraftfahrzeug (3) enthalten ist, **dadurch gekennzeichnet, dass** es die folgenden Schritte aufweist:
- Empfangen einer akustischen Welle (6), Schall genannt, die sich in dem Fluid (4) ausbreitet und von einem System (7) erzeugt wird, dessen Hauptfunktion nicht das Aussenden einer akustischen Welle ist;
- Bestimmen des Parameters des Fluids (4) ausgehend von einem Wert, der ausgehend von der empfangenen Welle gemessen wird.

## Claims

1. Tank (1) of fluid (4) for a motor vehicle (3), comprising a body (5) arranged to receive the fluid (4) and a system (9) for measuring a parameter of the fluid (4) in the tank (1) from an acoustic wave, the measuring system (9) comprising at least one acoustic sensor (13) designed to capture an acoustic wave (6), **characterized in that** the acoustic wave (6), called noise, is generated by another system (7), the main function of which is not that of emitting an acoustic wave.

2. Tank (1) according to the preceding claim, wherein the other system is a system (7) for extracting fluid (4) out of the tank (1).

3. Tank (1) according to claim 1 or 2, wherein the measuring system (9) comprises a device (11) for detecting the concentration of the fluid (4) comprising an acoustic reflection element mounted at a fixed distance in relation to the other system, the acoustic sensor (13) mounted between the reflection element and the other system (7) in order to capture the acoustic waves (6) generated by the other system (7) and a calculation module (14) arranged to determine the concentration of the fluid (4).

4. Tank (1) according to the preceding claim, wherein the acoustic reflection element is formed by the body (5) of the tank (1) or a plate (12) mounted in the tank (1).

5. Tank (1) according to claim 3 or 4, wherein the calculation module (14) comprises means to determine, based on the fixed distance, the type of fluid (4) and the time elapsed between the detections of each acoustic wave (6) generated by the other system (7) and its echo sent back by the reflection element, the concentration of the fluid (4).

6. Tank (1) according to any one of the preceding claims, wherein the measuring system (9) comprises a device (11) for detecting the level of the fluid (4) comprising the acoustic sensor (13) mounted in the tank (1) in order to capture the acoustic waves (6) generated by the other system and a calculation module (14) arranged to determine the level of the fluid (4).

7. Tank (1) according to the preceding claim, wherein the calculation module (14) comprises means to determine, based on the type of fluid and the time elapsed between the detections of each acoustic wave (6) generated by the other system and on its echo reflected by the upper surface (4ₛ) of the fluid (4), the level of the fluid (4) in the tank (1).

8. Tank (1) according to claim 6, wherein the measuring system (9) comprises a first acoustic sensor (13) mounted on the bottom of the tank (1), a second acoustic sensor (13) mounted at the top of the tank (1), the calculation module (14) comprising means to determine, based on the distance between the first and second acoustic sensors (13), the type of fluid (4), the type of filling gas and the time elapsed between the detection of the first acoustic sensor (13) and the second acoustic sensor (13) for each acoustic wave (6) generated by the other system (7), the level of the fluid (4) in the tank (1).

9. Tank (1) according to either claim 1 or 2, wherein the measuring system (9) comprises several acoustic sensors (13) mounted in the tank (1) in order to capture in several places the acoustic waves (6) generated by the other system (7) and a calculation module (14) arranged in order to determine the level and/or the concentrations of the fluid (4).

10. Tank (1) according to the preceding claim, wherein the acoustic sensors (13) are mounted at a set distance and orientation in relation to one another, the calculation module (14) comprising means to determine, based on the distance and orientation between the acoustic sensors (13), on the type of fluid (4) and the time elapsed between the detections of the acoustic sensors (13) for each acoustic wave (6) generated by the other system (7), the level and/or the concentrations of the fluid (4) in the tank (1).

11. Tank (1) according to the preceding claim, wherein the acoustic sensors (13) are aligned at a constant distance from one another.

12. Motor vehicle (3) **characterized in that** it comprises a tank (1) according to any one of the preceding claims.

13. Motor vehicle (3) according to the preceding claim, wherein the tank (1) is a fuel tank for a thermal engine (2), a tank for additive for the fuel of a thermal engine (2), a tank for product for the depollution of the exhaust gas of a thermal engine (2) or a fuel tank for a fuel cell.

14. Method for measuring a parameter of fluid (4) contained in a tank (1) for a motor vehicle (3), **characterized in that** it comprises the following steps:
- capturing an acoustic wave (6), called noise, propagating in the fluid (4) and generated by a system (7), the main function of which is not that of emitting an acoustic wave;
- determining the parameter of the fluid (4) based on a value measured on the basis of the captured wave.
